# EUROPEAN PATENT APPLICATION

(11) **EP 1 077 421 A2**
(43) Date of publication of application: **21.02.2001**
(21) Application number: 00306633.9
(22) Date of filing: 03.08.2000
(51) Int. Cl.: G06F 17/60

(54) **Technique for creating audience-specific views of documents**

(30) Priority: 18.08.1999 US 376896
(71) Applicant: International Business Machines Corporation, Armonk, NY 10504 (US)
(72) Inventor: Lection, David Bruce, c/o IBM United Kingdom Ltd., Winchester, Hampshire S021 2JN (GB); Molander, Mark Edward, c/o IBM United Kingdom Ltd., Winchester, Hampshire S021 2JN (GB); Salahshoor, Mohamad R., c/o IBM United Kingdom Ltd, Winchester, Hampshire S021 2JN (GB); Scanlon, John Lane, c/o IBM United Kingdom Ltd., Winchester, Hampshire S021 2JN (GB)
(74) Representative: Moss, Robert Douglas

(57) **Abstract**

A method, system, and computer program product for creating audience-specific views of documents (including e-mail messages; text-based documents; documents or messages containing multiple media such as text, images, sound files; etc.). A document (or message) author may designate selected sections of a document, and assigns properties to these sections. These properties include which recipients are to have that section in their view, and may further specify attributes such as a background colour or font to use when displaying the section, whether the section is copy-protected, whether the section can be forwarded and/or printed, whether the section is to be encrypted before forwarding or storing, whether the section can be rendered in audio and/or video, whether the section can be rendered in a virtual reality world, etc.

## Description

### Technical Field of the Invention

The present invention relates to a computer system, and deals more particularly with a method, system, and computer program product for intuitively creating audience-specific views of documents (including e-mail messages; text-based documents; documents or messages containing multiple media such as text, images, sound files; etc.).

### Background of the Invention

Today's electronic mail (hereinafter, "e-mail") applications typically allow the sender to address an e-mail document to multiple recipients. In addition, these applications usually allow the addressees to be grouped into three categories: the "To:" list, the "cc:" list, and the "BCC:" list. The last of these, "BCC:" or "blind carbon copy", provides a way for the sender to hide some of the addressees from the addressees listed in the "To:" and "cc:" lists. However, there is currently no user-friendly, convenient way for the e-mail author to specify particular parts of the e-mail document itself to be hidden from (or not sent to) some recipients, while being visible to (or sent to) the other recipients.

Often times the sender of e-mail may compose a note for which not all of the content is relevant to, or appropriate for, all recipients. For example, a memo may include a section with confidential or otherwise-restricted content which should not be seen by some recipients. As another example, a technical document may contain sections of interest to the development community, but not to another group such as the information development staff. In these situations, the sender of the e-mail has to draft two (or more) separate versions of the document, one with and one without the confidential and/or relevant content before it is mailed to the intended recipients. This requires more time and effort on the sender's part to compose multiple similar but different documents, with a corresponding increase in the potential for introduction of errors, and also may cause an increase in network traffic (due to the multiple documents that are being sent).

Similarly, today's word processing applications do not easily allow the author to control access to sections within a document. A document database may be able to control, in an all-or- nothing approach, access to a document on a per-user basis - for example, by providing password authorisation for each user, and verifying that the user is in fact permitted to see a particular document. Such document databases do not, however, allow access to be controlled at a finer- grained level such as restricting access by document section. As in the case of an e-mail document, sections of any document may be confidential or otherwise-restricted, or simply inappropriate for or irrelevant to certain audiences. Again, this results in the author having to create two or more versions of a document, and allowing different groups of readers access to those different versions. As discussed above, this requires extra time and effort for the document creator, introduces the possibility for errors and inadvertent inconsistencies between the versions, and it also requires additional storage space for the multiple versions (which may be, for the most part, storing redundant information).

Accordingly, a need exists for a technique for creating audience-specific views of documents while avoiding the inconveniences and inefficiencies of existing systems and applications.

### DISCLOSURE OF THE INVENTION

The present invention provides a technique for creating audience-specific views of documents.

The present invention also provides this technique whereby the inconveniences and inefficiencies of existing approaches are avoided.

Furthermore, the present invention provides this technique by identifying sections of a document which are to be limited in view and defining properties for those sections, where these properties include such things as the allowed audience.

In accordance with the purpose of the invention as broadly described herein, the present invention provides a system, method, and computer program product for use in a computing environment, for creating audience-specific views of documents. This technique comprises: composing a document, by a document author, using a document composer application; specifying two or more recipients of the document; selecting one or more sections of the document, wherein the selected sections are to be limited in view to a subset of the two or more recipients; and marking the selected sections as being specific to an audience comprised of the subset.

This technique preferably further comprises: distributing the document to the specified recipients, wherein a first version of the document which includes the selected sections is distributed to the subset and a second version of the document which does not include the selected sections is distributed to the specified recipients not in the subset.

Or, this technique may preferably further comprise: storing the document in a repository; indicating the selected sections in the stored document; and storing an identification of the recipients in the subset. In this case, the technique may further comprise delivering the stored document in response to a request from a user, where this delivering further comprises: delivering a first version of the stored document to the user if a user identification of the user matches an entry in the stored identification, wherein the first version includes the selected sections; and delivering a second version of the stored document to the user if the user identification does not match an entry in the stored identification, wherein the second version does not include the selected sections.

The selected sections may have one or more properties associated therewith, where these properties comprise: copy protection, prevention from forwarding, prevention from printing, encryption, prevention from audio rendering, prevention from video rendering, and prevention from rendering in a virtual reality world; and wherein a value of each of these properties is set to true or false.

The document may be encoded in an Extensible Markup Language (XML) syntax, in which case the marking comprises adding XML tags to the selected sections. The distributing and delivering processes may apply an Extensible Stylesheet Language (XSL) style sheet to the document.

### BRIEF DESCRIPTION OF THE DRAWINGS

The present invention will now be described by way of example only, with reference to preferred embodiments thereof, as illustrated in the following drawings:
Figure 1 is a block diagram of a computer workstation environment in which the present invention may be practised;
Figure 2 is a diagram of a networked computing environment in which the present invention may be practised;
Figure 3 depicts a sample e-mail document with certain sections intended for a subset of the addressees, where these sections are preferably marked visually according to the preferred embodiment of the present invention;
Figure 4 shows an example user interface graphic that may be used to request limiting a view to a subset of addressees to whom audience-specific information is to be presented, and to view the result of limiting a document to a particular view, according to the preferred embodiment of the present invention;
Figure 5 shows an example of a user interface dialogue that may be used to specify properties of a view to be used with documents, according to the present invention;
Figures 6 - 8 illustrate flow charts which set forth the logic which may be used to implement the preferred embodiment of the present invention; and
Figure 9 depicts Extensible Markup Language (XML) syntax that may be used to represent the sample document of Fig. 3.

### DETAILED DESCRIPTION OF THE INVENTION

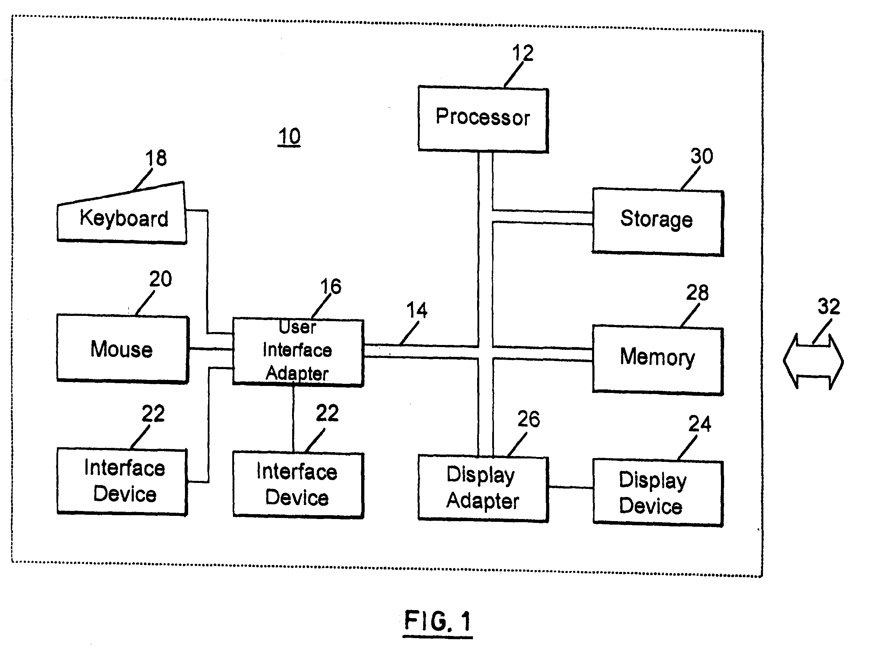

Figure 1 illustrates a representative workstation hardware environment in which the present invention may be practised. The environment of Fig. 1 comprises a representative single user computer workstation 10, such as a personal computer, including related peripheral devices. The workstation 10 includes a microprocessor 12 and a bus 14 employed to connect and enable communication between the microprocessor 12 and the components of the workstation 10 in accordance with known techniques. The workstation 10 typically includes a user interface adapter 16, which connects the microprocessor 12 via the bus 14 to one or more interface devices, such as a keyboard 18, mouse 20, and/or other interface devices 22, which can be any user interface device, such as a touch sensitive screen, digitised entry pad, etc. The bus 14 also connects a display device 24, such as an LCD screen or monitor, to the microprocessor 12 via a display adapter 26. The bus 14 also connects the microprocessor 12 to memory 28 and long-term storage 30 which can include a hard drive, diskette drive, tape drive, etc.

The workstation 10 may communicate with other computers or networks of computers, for example via a communications channel or modem 32. Alternatively, the workstation 10 may communicate using a wireless interface at 32, such as a CDPD (cellular digital packet data) card. The workstation 10 may be associated with such other computers in a local area network (LAN) or a wide area network (WAN), or the workstation 10 can be a client in a client/server arrangement with another computer, etc. All of these configurations, as well as the appropriate communications hardware and software, are known in the art.

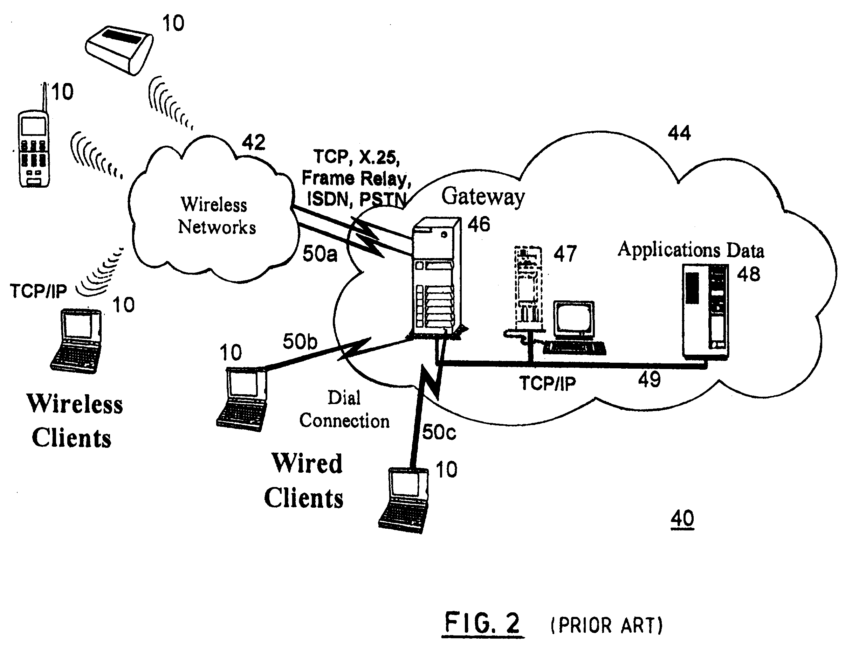

Figure 2 illustrates a data processing network 40 in which the present invention may be practised. The data processing network 40 may include a plurality of individual networks, such as wireless network 42 and network 44, each of which may include a plurality of individual workstations 10. Additionally, as those skilled in the art will appreciate, one or more LANs may be included (not shown), where a LAN may comprise a plurality of intelligent workstations coupled to a host processor.

Still referring to Figure 2, the networks 42 and 44 may also include mainframe computers or servers, such as a gateway computer 46 or application server 47 (which may access a data repository 48). A gateway computer 46 serves as a point of entry into each network 44. The gateway 46 may be preferably coupled to another network 42 by means of a communications link 50a. The gateway 46 may also be directly coupled to one or more workstations 10 using a communications link 50b, 50c. The gateway computer 46 may be implemented utilising an Enterprise Systems Architecture/370 available from International Business Machines Corporation ("IBM"), an Enterprise Systems Architecture/390 computer, etc. Depending on the application, a midrange computer, such as an Application System/400 (also known as an AS/400) may be employed. ("Enterprise Systems Architecture/370" is a trademark of IBM; "Enterprise Systems Architecture/390", "Application System/400", and "AS/400" are registered trademarks of IBM.)

The gateway computer 46 may also be coupled 49 to a storage device (such as data repository 48). Further, the gateway 46 may be directly or indirectly coupled to one or more workstations 10.

Those skilled in the art will appreciate that the gateway computer 46 may be located a great geographic distance from the network 42, and similarly, the workstations 10 may be located a substantial distance from the networks 42 and 44. For example, the network 42 may be located in California, while the gateway 46 may be located in Texas, and one or more of the workstations 10 may be located in New York. The workstations 10 may connect to the wireless network 42 using a networking protocol such as the Transmission Control Protocol/Internet Protocol ("TCP/IP") over a number of alternative connection media, such as cellular phone, radio frequency networks, satellite networks, etc. The wireless network 42 preferably connects to the gateway 46 using a network connection 50a such as TCP or UDP (User Datagram Protocol) over IP, X.25, Frame Relay, ISDN (Integrated Services Digital Network), PSTN (Public Switched Telephone Network), etc. The workstations 10 may alternatively connect directly to the gateway 46 using dial connections 50b or 50c. Further, the wireless network 42 and network 44 may connect to one or more other networks (not shown), in an analogous manner to that depicted in Fig. 2.

Software programming code which embodies the present invention is typically accessed by the microprocessor 12 of the workstation 10 and server 47 from long-term storage media 30 of some type, such as a CD-ROM drive or hard drive. The software programming code may be embodied on any of a variety of known media for use with a data processing system, such as a diskette, hard drive, or CD-ROM. The code may be distributed on such media, or may be distributed to users from the memory or storage of one computer system over a network of some type to other computer systems for use by users of such other systems. Alternatively, the programming code may be embodied in the memory 28, and accessed by the microprocessor 12 using the bus 14. The techniques and methods for embodying software programming code in memory, on physical media, and/or distributing software code via networks are well known and will not be further discussed herein.

A user's computer on which the present invention operates may be operating in standalone mode, or it may be connected to a server using a wireline connection or a wireless connection. Wireline connections are those that use physical media such as cables and telephone lines, whereas wireless connections use media such as satellite links, radio frequency waves, and infrared waves. Many connection techniques can be used with these various media, such as: using the computer's modem to establish a connection over a telephone line; using a LAN card such as Token Ring or Ethernet; using a cellular modem to establish a wireless connection; etc. The user's computer may be any type of computer processor, including laptop, handheld or mobile computers; vehicle-mounted devices; desktop computers; mainframe computers; etc., having processing and communication capabilities. The remote server, similarly, can be one of any number of different types of computer which have processing and communication capabilities. These techniques are well known in the art, and the hardware devices and software which enable their use are readily available. Hereinafter, the user's computer will be referred to equivalently as a "workstation", "machine", "device", or "computer", and use of any of these terms or the term "server" refers to any of the types of computing devices described above.

In the preferred embodiment, the present invention is implemented as one or more modules (also referred to as code subroutines, or "objects" in object-oriented programming) of a computer software program (or programs). The present invention may be used with document creation systems in a standalone environment, or in a networking environment such as an Internet environment, a corporate intranet, an extranet, or any other networking environment. The program code of the preferred embodiment may be implemented as objects in an object-oriented programming language, or in a conventional procedurally-oriented language, or in a mix of object-oriented and procedural language code. The code of the present invention may operate as part of an application executing remotely on a server (with which the client communicates by sending requests and receiving responses), or as part of an application executing locally on a client machine.

The present invention enables the composer of an e-mail memo, or author of any type of document, to construct a single document comprising sections which are viewable by all or by some subset of the intended recipients or readers. The composer or author specifies which sections are to be sent to, or are to be viewable by, which addressees. (For ease of reference, memos and other forms of documents will be referred to herein as "documents", and the composer or author of such will be referred to as the "author".) According to the preferred embodiment, this technique is provided by assigning a set of one or more properties to selected document sections (where the document author determines what comprises a section). This set of properties includes a specification of which addressees or readers are to have that section in their view, and may include such further properties as a background colour or font to use when displaying this section, whether the section is copy-protected, whether the section can be forwarded and/or printed, whether the section is to be encrypted, whether audio and/or video rendering of the section is to be prevented, whether rendering of the section in a virtual reality world is to be prevented, etc. (Note that this list of properties is to be considered as illustrative only. Many other properties may be used within the scope of the present invention, where those other properties may be pertinent to the particular media and/or technology with which the present invention is used.)

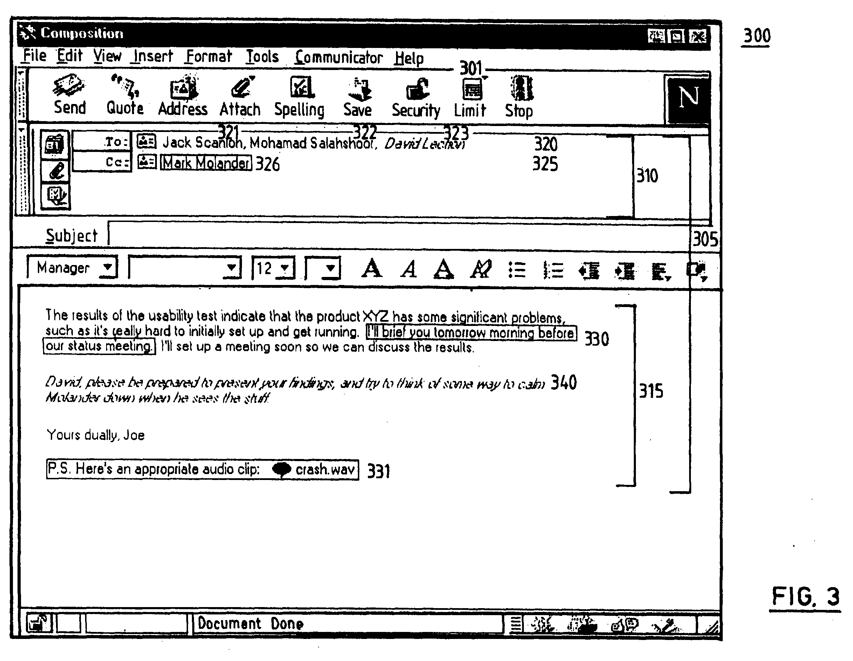

The preferred embodiment of the present invention will now be discussed in more detail with reference to Figs. 3 through 9.

Fig. 3 depicts a sample e-mail document 305 presented on a user's display as a graphical image 300, where certain sections of this document are intended for only a subset of the addressees. According to the preferred embodiment of the present invention, these sections are preferably marked visually on the author's display to indicate that they are for limited distribution or viewing. This visual indication provides an easy-to-use mechanism for enabling the author to verify that the appropriate treatment has been provided (i.e. that he has delineated the sections properly, and limited distribution properly) for the various sections of the document before he distributes the document content to the addressees. (Similarly, this technique is usable for proper limiting of views of documents to be stored in a repository for subsequent retrieval by target document readers.)

In the example of Fig. 3, the e-mail document 305 has an addressee section 310 and a body 315. The addressee section 310 includes three document recipients 321, 322, 323 on the "To:" list 320, one document recipient 326 on the "cc:" list 325, and no document recipients on the "BCC:" list (not shown). As can be seen from the content of the document body 315, this example e-mail message is about a status meeting. A large portion of the message body 315 is shown in normal font, indicating (according to this example) that this information is not limited in view and thus will be viewable by all addressees. Two different limited views have been applied to this message body, however. For a first limitation, the address of addressee 323 is depicted in a visually distinct manner, where this same visual indicator is used for a delineated section 340 of the document body 315. Thus, this highlighted section 340 of the document will only be viewable by the similarly-highlighted recipient 323; the other recipients 321, 322, 326 will see the document without this highlighted section. As can be seen from the content of the sample text is section 340, it is important that viewing of this information is strictly limited to the intended addressee 323. In addition, there are also two sections 330, 331 of the document body 315 that are highlighted in a different manner, representing the second limited view. The address of user 326 is highlighted in this same style, providing a visual clue that sections 330, 331 are limited to the view of similarly-highlighted user 326. As can be seen, these sections of the message for recipient 326 provide extra, audience-specific information that (1) tells this recipient that the message author will brief him before the status meeting (element 330), and (2) provides this recipient with a audio clip related to the situation (element 331). Other audience-specific information could be included within or attached to this message body 315, such as a graph (stored as a ".gif" file, for example) that pertains to the topic to be discussed in the meeting that is being called.

Note that while italicised font (used for elements 323 and 340) and a background colour or shading (used for elements 326, 330, and 331) have been used in this example, these are merely representative techniques that may be used as a visual reminder of the boundaries of a limited- view section. Note further that the addresses shown in Fig. 3 are depicted as user names. Equivalently, a nickname or other identifier such as a full e-mail address may be used to identify a recipient. In addition, addressees may be specified using one or more distribution lists which further identify multiple users, or addressees may be specified by classes or categories (such as "All Managers"), where the particular members of the class or category can be resolved using known techniques such as inspecting attribute settings in database records.

Many other examples can be imagined where it would be imperative that only the selected recipient(s) have access to selected subsets of the information content of a document. As has been stated, the present invention provides the capability to easily and intuitively define and enforce these content restrictions such that the information in a limited-view section will only be distributed to an allowed recipient.

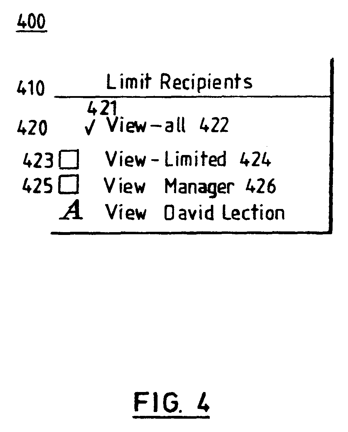

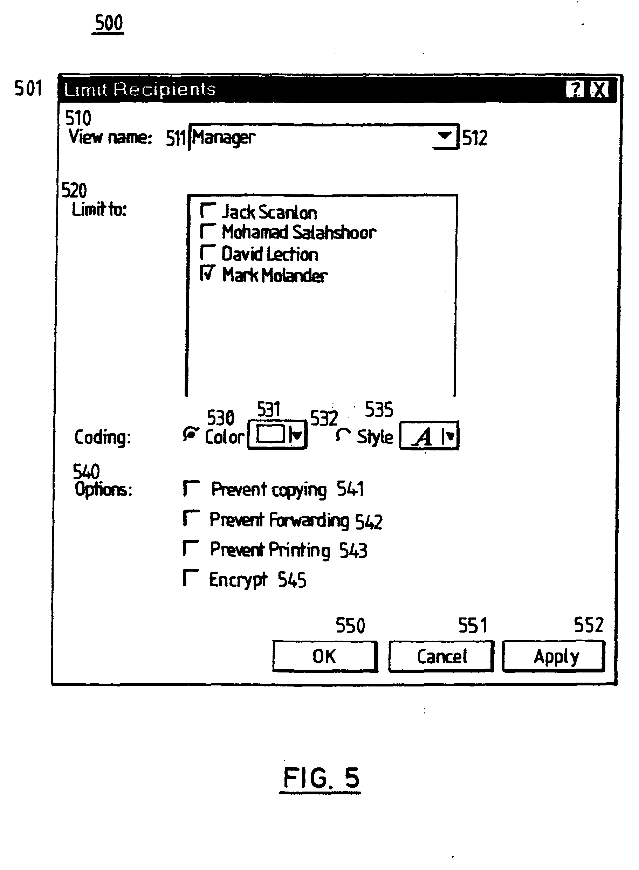

While composing a document having audience-specific or limited-view sections, the author will need to apply the limited view technique of the present invention to selected sections, and may choose to view the result of limiting a document to a particular view. Fig. 4 shows an example user interface graphic 400 that may be used for invoking these functions. In this sample graphic, the text "Limit Recipients" 410 is provided as a choice upon which an author may click to indicate that he would like to use a limited view. In the preferred embodiment, choosing this function results in display of the user interface dialogue of Fig. 5 (discussed below). Area 420 of graphic symbol 400 then presents choices of which audience-specific view the author would like to see. (Alternatively, separate graphic symbols may be defined and used for requesting application of limited views, and for requesting to see the result.) Preferably, a checkbox (or radio button) and view description (such as a textual view name) will be displayed in this area 420 for each limited view the author has defined. In this example, the choice to view all document content is represented by elements 421 and 422 (where check mark 421 has been shown without a checkbox to indicate that it is the current choice). For this example, two views described as "Limited" 424 and "Manager" 426 have been previously defined. If the author selects either view 423 or 425, the document content displayed in graphical image 300 will be updated to filter out content from the non-selected limited views. (That is, if the author selects view 425, the document 305 will display the non-limited content for all addressees and the content that is limited to the view defined as "Manager" 426.)

To create a document containing audience-specific information, the author may select from previously-created views or define a new view. Fig. 5 shows an example of a user interface dialogue 500 that may be used to define a view and to specify properties of that view. Hereinafter, the set of properties defined for a view is used synonymously with the term "view". The dialogue title 501 "Limit Recipients" indicates that this panel is for limiting views for particular recipients. A name is assigned to each defined view, as shown at 510, enabling later reference to this view (such as choosing to apply the view to a document). The view depicted in this example is the view defined as "Manager" 511, which was also shown as a selectable choice 426 on graphic 400 of Fig. 4. Preferably, the defined views are accessible from dialogue 500 by pressing the drop- down list indicator 512. To enable creation of a new view, the drop down list control could also serve as an entry field (i.e., a "combo box").

The "Limit to:" section 520 may present the addresses of all addressees of a document being composed, as in this example where the four addressees of memo 305 are shown. Alternatively, all addresses from an author's e-mail address book or other such recipient registry may be presented for selection. Preferably, a checkbox graphic is displayed for each potential addressee, enabling the user creating the view to easily select those addressees that are allowed to view content limited by the view named at 511. The allowable recipients of a particular view is thus one property of the view definable from dialogue 500.

The view definition dialogue 500 preferably specifies each additional property that may be selected for a particular view, enabling a user to select a value for the property. In this example, element 530 indicates that a background colour 531 may be associated with a view (by clicking on indicator 532, causing a colour palette to be displayed), where this colour 531 will be used to display sections of the document which are limited by this view to the document author for content verification purposes. A font type, size, or style selection 535 may be provided in addition to, or instead of, a colour section 530 to provide the capability to distinguish limited-view sections by use of bold font, italics, underlining, etc.

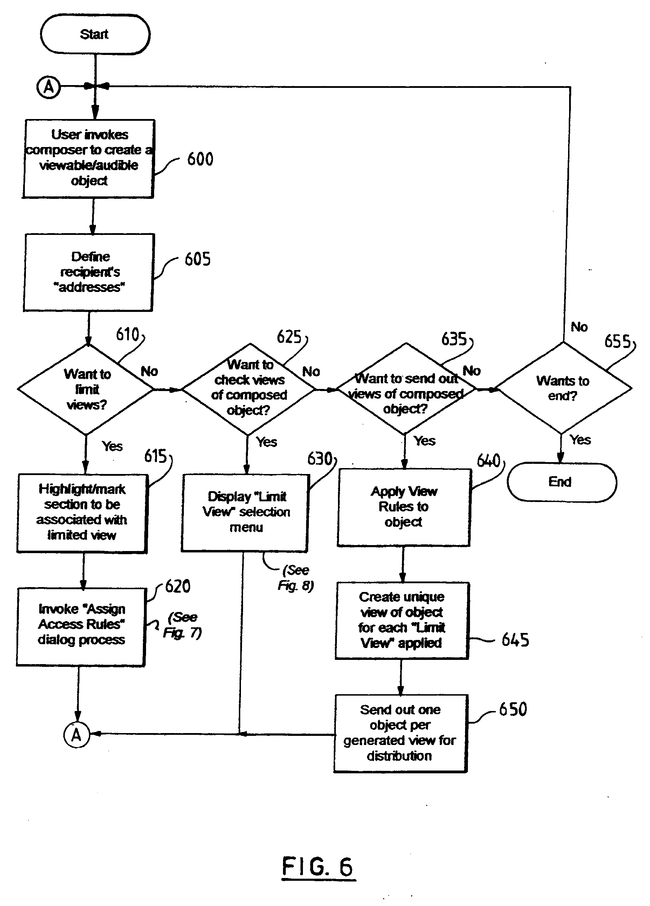

Several properties are also depicted at area 540 of Fig. 5 which have values having the semantics of "on" or "off" (equivalently, "true" or "false"). According to the preferred embodiment, limitations can be selected that prevent copying 541, forwarding 542, and/or printing 543 of the content of a view. In addition, a property 545 may be selectable to indicate that the content of a view should be encrypted before distributing the document to its recipients (in the case of e-mail) or storing the document in a repository. (As described above, other properties which have not been depicted may be used instead of, or in addition to, those shown.) The preferred embodiment technique for enforcing such properties is discussed below, with reference to Figs. 6 - 9.

Once a view has been defined using dialogue 500, the user preferably presses button 550 or an equivalent "Save" feature to store this view. When the associated sections of the document have been selected (through highlighting or equivalent techniques, as will be described below with reference to Figs. 6 through 8), the "Apply" button 552 may be pressed to cause the view to be associated with those selected sections.

The logic with which the preferred embodiment may be implemented will now be discussed with reference to the flowcharts in Figs. 6 - 8. The process begins at Block 600 of Fig. 6, where a document author has invoked a composer (such as a word processing application or e- mail application) that has been augmented with the novel audience-specific document creation capabilities of the present invention. Block 600 indicates that the object being composed may be viewable or audible. According to the preferences of a particular author, it may be desirable to begin the composition process by specifying the document content (Block 600), or to begin by defining the intended recipients of the document (Block 605). In addition, it may be desirable to intermingle creation of the content with specification of the recipients. While these functions are shown as occurring sequentially in Fig. 6, it is to be understood that an implementation of the present invention preferably provides for switching between them as desired by the author. (This capability is provided by currently-existing composers, as is well known in the art.) Further, a user may wish to perform the limit view function (Block 610), the check view function (Block 625), sending of the composed object (Block 635) or to quit (Block 655) at any point during operation of the function of Blocks 600 and 605. Thus, an implementation of the present invention preferably provides for selectively invoking these operations at any time during operation of Blocks 600 and 605, such as by using an interrupt mechanism.

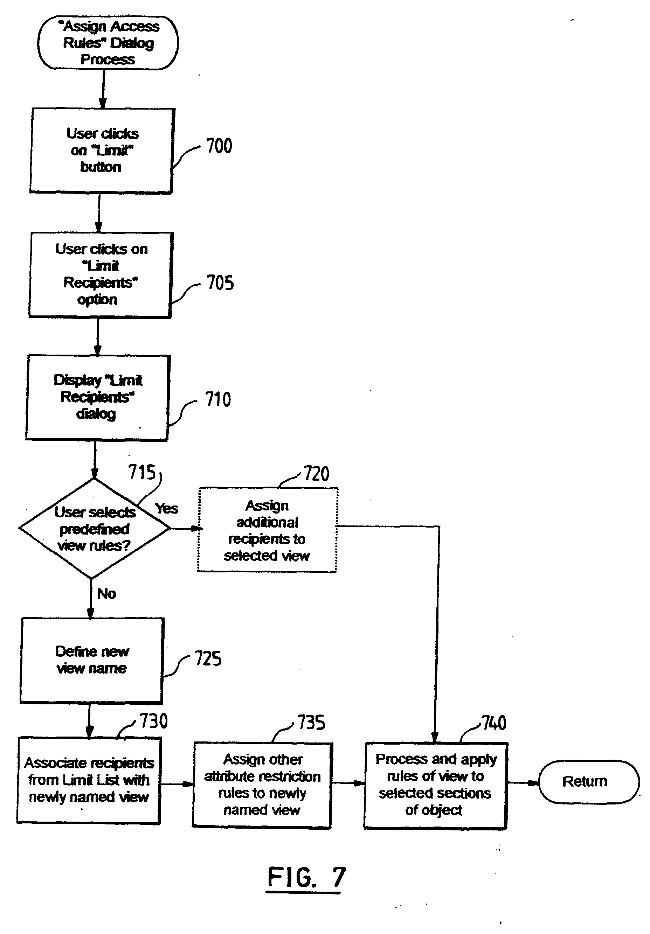

When the implementation of the present invention determines that the document author has chosen to specify a view limitation, Block 610 has a positive result and control transfers to Block 615. The author highlights or otherwise marks the boundaries of a section (or sections), for example by holding down the left mouse button while dragging the mouse pointer, that is to be associated with a limited view (Block 615). The technique with which access rules are applied to limit the view (Block 620) is described in more detail in Fig. 7.

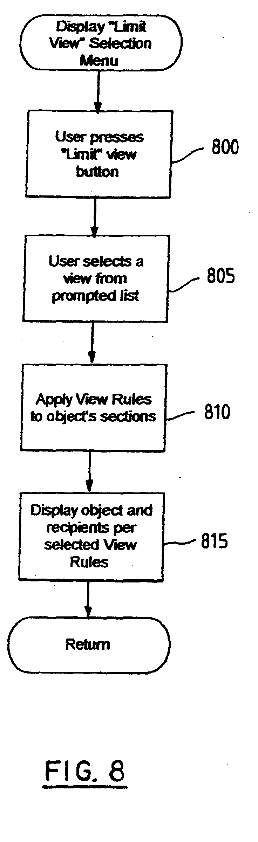

If the author requests to check, or preview, the results of applying views to a composed object, Block 625 has a positive result. In this case, the "Limit View" selection menu is displayed (Block 630), as further described with reference to Fig. 8.

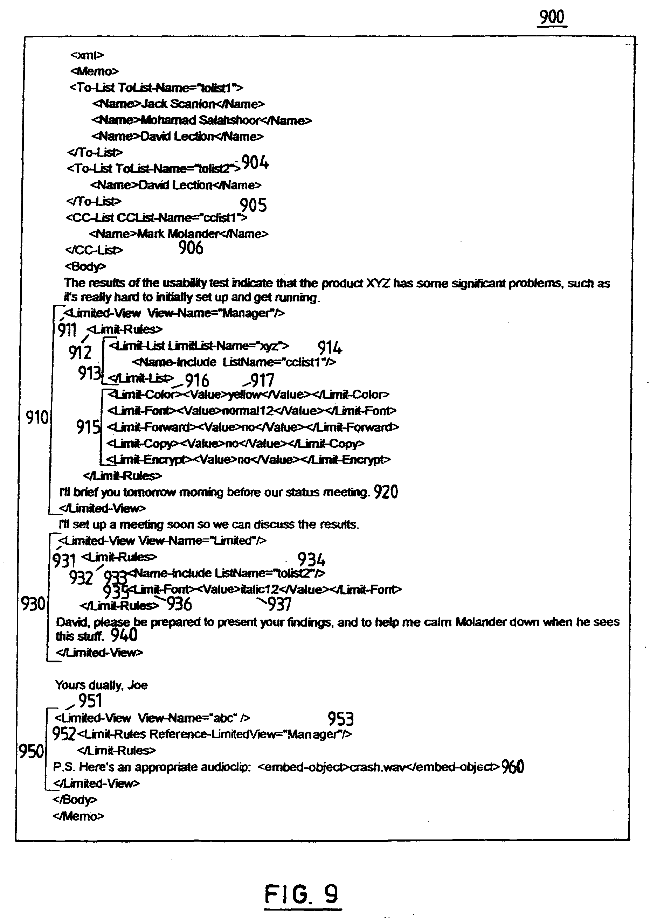

If the author chooses to distribute the composed object, then Block 635 has a positive result, and control transfers to Block 640 where the view rules are applied to the object. As will be discussed in more detail below with reference to Fig. 9, the preferred embodiment applies view rules to objects represented as tags and values in the XML notation. The result of this application process is that a unique view of each object is created (Block 645) for each view defined for the object (including a default view which has no limitations). These views are distributed to the appropriate recipients at Block 650. Note that if an addressee is named as belonging to more than one view on a particular object, a single object representing the composite of the appropriate views will be sent to this addressee.

Alternatively, in a word processing application, the function of Block 650 is to store each view to a document repository (such as a database or directory) along with an identification of the recipients or readers who are permitted access to this stored document. (In addition, any other applicable properties will also be stored in the repository, including a reference to an encryption key when encryption has been used.)

Upon completion of Blocks 620, 630, 650, and upon a negative result at Block 655, control returns to Block 600 to enable the author to continue document composition.

If the author chooses to end document composition (Block 655), then the processing of Fig. 6 ends.

Fig. 7 depicts the preferred embodiment of the present invention of the logic used to assign access rules to selection sections of a document, and is invoked from Block 620 of Fig. 6. The process begins at Block 700, where the author clicks on the "Limit" button 301 of Fig. 3 (or otherwise requests to assign limit rules, such as by pressing an appropriate function key). Next (Block 705), the author clicks on the "Limit Recipients" option 410 (Fig. 4), after which the "Limit Recipients" dialogue 500 is displayed (Block 710). In an alternative approach, dialogue 500 may be displayed directly upon selection of a "Limit" operation (such as clicking of button 301).

Block 715 checks to see if the author has selected a new view, or a previously-defined view. If a previously-defined view is selected, then as indicated by the optional processing of Block 720 the author may choose to assign additional recipients to the selected view (i.e. by clicking additional checkboxes in area 520). In addition, the author may choose to modify one or more of the other properties (colour, font, encryption, etc.) of this view. Once any such changes are complete, the author presses the "Apply" button 552 (or indicates in an equivalent manner that the modifications are complete), which transfers control to Block 740.

When the author chooses to define a new view (i.e. a negative response at Block 715), he specifies a name to be associated with this view (Block 725) and then selects one or more recipients from "Limit to:" list 520 (Fig. 5) to be associated with this view (Block 730). (As stated earlier, this includes the ability to specify recipients by selecting one or more distribution lists.) Any other desired properties of the view are also selected from the view definition dialogue 500 (Block 735).

When control reaches Block 740, the selected view is processed, applying the associated view limitations to the selected sections of the document being composed. In the preferred embodiment of the present invention, this comprises generating XML tags and embedding these tags in an object containing an XML syntax specification of the document being composed. Examples of the tags which are generated are depicted in Fig. 9, and will be discussed in more detail below. After completing the processing of Block 740, control returns to the invoking logic of Fig. 6. (For more information on XML, refer to "Extensible Markup Language (XML™)", available on the Internet at http://www.w3.org/xml.)

Fig. 8 depicts the logic used in the preferred embodiment of the present invention to implement displaying of a limited view, enabling the author to check that the limitations have been properly defined and will be applied properly if he chooses to distribute (i.e. send or store) the composed document. The author begins this process by pressing the "Limit" button 301 (Block 800) or function key, causing the graphic 400 to be displayed. The author then selects (Block 805) a view from a list of all defined views which are presented in area 420, by clicking one of the displayed choices .

Block 810 applies the selected view rules to the selected sections of the document being composed. In the preferred embodiment of the present invention, this comprises applying a set of view rules to the XML document which was discussed above with reference to Block 740 of Fig. 7. The object resulting from operation of Block 810 (with its selected sections either highlighted or omitted, depending on the properties of the selected view, and similarly highlighted or omitted recipients) is displayed to the author at Block 815, and represents the composed object that will be sent out (or stored) if the author so chooses. Control then returns to the invoking logic of Fig. 6.

Fig. 9 shows a sample XML document 900 with markup tags for audience-specific section, according to the preferred embodiment of the present invention. This document represents the example memo of Fig. 3. Two audience-specific views are represented in this document 900, where one has been assigned (by the author, when using the dialogue 500 of Fig. 5) the view name "Manager" and the other has been named "Limited". Two sections of the document 900 are specific to the Manager view, as shown at 910 and 950, and one section is specific to the Limited view, shown at 930. The tag syntax 〈Limited-View View-Name= "..."〉 911, 931, 951 has been used as the opening delimiter of the audience-specific sections. (The syntax of this tag, as well as the other tags of Fig. 9, are merely illustrative.) Note that in tag 951, an additional view name has been used for the second occurrence of a section specific to the Manager view, where a reference is then made to associate this section with the Manager view at 953.

The 〈Limited-View ...〉 tag has a next-lower-level embedded tag 〈Limit-Rules〉 912, 932, 952. This tag (along with its ending 〈/Limit-Rules〉 tag) brackets the property specification, or rules, of the associated view. The first entry within this list of rules is the limited addressee information. As shown at 913, the first audience-specific section 910 is limited to the addressees identified in the list named "cclist1" 914, where this list has previously been defined at 905 as containing the name "Mark Molander" 906. The second section 950 which is limited to this same audience is not required to restate the addressees (nor to restate the properties of the view), but rather refers back 953 to the earlier definition 911. Section 930 is limited to addressees defined in the list "tolist2", as indicated by 934 of tag 933. This "tolist2" is defined at 904.

The properties of the views are specified at element 915 (for the Manager view) and element 935 (for the Limited view). The values of these properties, as with the value of the addressee list for each view, were defined by the author using dialogue 500. A representative number of properties and values in shown in Fig. 9, although a particular implementation of the present invention may define and use additional or different properties without deviating from the inventive concepts disclosed herein. As can be seen, one of the properties 916 for the Manager view is colour, which has been chosen by the author as yellow 917. This indicates that, when the document 305 in Fig. 3 (corresponding to XML document 900) is displayed to the author for verification (see Block 625 of Fig. 6), the sections specific to the Manager view will be displayed with a yellow background colour. For the Limited view, a property 936 has been shown that specifies an alternate font (italic 12-point) 937 to be used for displaying the sections limited to this view.

Finally, the audience-specific information 920, 940, 960 of each limited section is enclosed within the delimiting 〈Limited-View〉 and 〈/Limited-View〉 tags.

In one approach, the view rules of the present invention may be codified as Extensible Style Sheet Language (XSL) rules, which are then applied by an XSL processor to enforce the appropriate view restrictions and properties. (For more information on XSL, refer to "Extensible Stylesheet Language (XSL)", available on the Internet at http://www.w3.org/Style/XSL.) Techniques for using XSL in this manner are well known in the art, and will not be described in detail herein.

In another approach, procedural or object-oriented programming code may be written to enforce the view rules. Such code may search for specific syntax or tags (such as those depicted in Fig. 9) when preparing to display, distribute, or store a composed document, and then execute tag-specific logic to enforce the author's selected restrictions and properties. For example, upon detecting the 〈Limit-Font〉 tag 935 in Fig. 9, this code would preferably insert a formatting command that would cause the audience-specific text 940 within the scope of selected section 930 to be displayed in 12-point italicised font. Techniques for writing such code will be obvious to one of ordinary skill in the art.

As has been demonstrated, the present invention discloses advantageous techniques for creating audience-specific content. The technique disclosed herein is easy to use, and intuitive in nature. In addition, a verification process has been defined, with which an author may preview his composed documents before distribution or storing, to ensure that the sections have been properly delineated and that the proper addressees will receive the proper document content.

## Claims

1. A computer program for creating audience-specific views of documents in a computer system, comprising:
a document composer application;
computer-readable program code means for composing a document, by an author of said document, using said document composer;
computer-readable program code means for specifying two or more recipients of said document;
computer-readable program code means for selecting one or more sections of said document, wherein said selected sections are to be limited in view to a subset of said two or more recipients; and
computer-readable program code means for marking said selected sections as being specific to an audience comprised of said subset.

2. A computer program as claimed in claim 1, further comprising:
computer-readable program code means for distributing said document to said specified recipients, wherein a first version of said document which includes said selected sections is distributed to said subset and a second version of said document which does not include said selected sections is distributed to said specified recipients not in said subset.

3. A computer program as claimed in claim 1, further comprising:
computer-readable program code means for storing said document in a repository;
computer-readable program code means for indicating said selected sections in said stored document; and
computer-readable program code means for storing an identification of said recipients in said subset.

4. A computer program as claimed in claim 3, further comprising:
computer-readable program code means for delivering said stored document in response to a request from a user, further comprising:
computer-readable program code means for delivering a first version of said stored document to said user if a user identification of said user matches an entry in said stored identification, wherein said first version includes said selected sections; and
computer-readable program code means for delivering a second version of said stored document to said user if said user identification does not match an entry in said stored identification, wherein said second version does not include said selected sections.

5. A computer program as claimed in any preceding claim, wherein said selected sections have one or more properties associated therewith, said properties comprising: copy protection, prevention from forwarding, prevention from printing, encryption, prevention from audio rendering, prevention from video rendering, and prevention from rendering in a virtual reality world; and wherein a value of each of said properties is set to true or false.

6. A computer program as claimed in any preceding claim, wherein:
said document is encoded in an Extensible Markup Language (XML) syntax; and
said computer-readable program code means for marking comprises computer-readable program code means for adding XML tags to said selected sections.

7. A computer program as claimed in 6, wherein:
said computer-readable program code means for distributing applies an Extensible Stylesheet Language (XSL) style sheet to said document.

8. A system in a computing environment for creating audience-specific views of documents, comprising:
a document composer application;
means for composing a document, by an author of said document, using said document composer;
means for specifying two or more recipients of said document;
means for selecting one or more sections of said document, wherein said selected sections are to be limited in view to a subset of said two or more recipients; and
means for marking said selected sections as being specific to an audience comprised of said subset.

9. A system as claimed in claim 8, further comprising:
means for distributing said document to said specified recipients, wherein a first version of said document which includes said selected sections is distributed to said subset and a second version of said document which does not include said selected sections is distributed to said specified recipients not in said subset.

10. A system as claimed in claim 8, further comprising:
means for storing said document in a repository;
means for indicating said selected sections in said stored document; and
means for storing an identification of said recipients in said subset.

11. A system as claimed in claim 10, further comprising:
means for delivering said stored document in response to a request from a user, further comprising:
means for delivering a first version of said stored document to said user if a user identification of said user matches an entry in said stored identification, wherein said first version includes said selected sections; and
means for delivering a second version of said stored document to said user if said user identification does not match an entry in said stored identification, wherein said second version does not include said selected sections.

12. A system as claimed in any of claims 8 to 11, wherein said selected sections have one or more properties associated therewith, said properties comprising: copy protection, prevention from forwarding, prevention from printing, encryption, prevention from audio rendering, prevention from video rendering, and prevention from rendering in a virtual reality world; and wherein a value of each of said properties is set to true or false.

13. A system as claimed in any of claims 8 to 12, wherein:
said document is encoded in an Extensible Markup Language (XML) syntax; and
said means for marking comprises means for adding XML tags to said selected sections.

14. A system as claimed in claim 13, wherein:
said means for distributing applies an Extensible Stylesheet Language (XSL) style sheet to said document.

15. A method for creating audience-specific views of documents in a computing environment, comprising the steps of:
composing a document, by an author of said document, using a document composer application;
specifying two or more recipients of said document;
selecting one or more sections of said document, wherein said selected sections are to be limited in view to a subset of said two or more recipients; and
marking said selected sections as being specific to an audience comprised of said subset.

16. A method as claimed in claim 15, further comprising the steps of:
distributing said document to said specified recipients, wherein a first version of said document which includes said selected sections is distributed to said subset and a second version of said document which does not include said selected sections is distributed to said specified recipients not in said subset.

17. A method as claimed in claim 15, further comprising the steps of:
storing said document in a repository;
indicating said selected sections in said stored document; and
storing an identification of said recipients in said subset.

18. A method as claimed in claim 17, further comprising the steps of:
delivering said stored document in response to a request from a user, further comprising the steps of:
delivering a first version of said stored document to said user if a user identification of said user matches an entry in said stored identification, wherein said first version includes said selected sections; and
delivering a second version of said stored document to said user if said user identification does not match an entry in said stored identification, wherein said second version does not include said selected sections.

19. A method as claimed in any of claims 15 to 18, wherein said selected sections have one or more properties associated therewith, said properties comprising: copy protection, prevention from forwarding, prevention from printing, encryption, prevention from audio rendering, prevention from video rendering, and prevention from rendering in a virtual reality world; and wherein a value of each of said properties is set to true or false.

20. A method as claimed in any of claims 15 to 19, wherein:
said document is encoded in an Extensible Markup Language (XML) syntax; and
said marking step comprises adding XML tags to said selected sections.

21. A method as claimed in claim 20, wherein:
said distributing step applies an Extensible Stylesheet Language (XSL) style sheet to said document.
